# EUROPEAN PATENT APPLICATION

(11) **EP 4 428 984 A1**
(43) Date of publication of application: **11.09.2024**
(21) Application number: 23895525.6
(22) Date of filing: 16.11.2023
(51) Int. Cl.: H01M 10/0587, H01M 10/04, H01M 50/533, H01M 50/466, H01M 50/107, H01M 10/052

(54) **JELLY-ROLL TYPE ELECTRODE ASSEMBLY, JELLY-ROLL TYPE ELECTRODE ASSEMBLY MANUFACTURING METHOD, AND SECONDARY BATTERY COMPRISING SAME**

(30) Priority: 01.12.2022 KR 20220165774; 01.12.2022 KR 20220165783
(71) Applicant: LG Energy Solution, Ltd., Seoul 07335 (KR)
(72) Inventor: KWON, Yonguk, Daejeon 34122 (KR); HA, Jong Han, Daejeon 34122 (KR)
(74) Representative: Goddar, Heinz J.
(86) International application number: PCT/KR2023/018464
(87) International publication number: WO 2024/117624

(57) **Abstract**

Disclosed are a jelly-roll type electrode assembly and a secondary battery including the same.

## Description

### [Technical Field]

The present invention relates to a jelly-roll type electrode assembly and a secondary battery including the same, and more particularly, to a jelly-roll type electrode assembly including a separator overlapping portion and a cylindrical secondary battery including the same.

This application claims priority to and the benefit of Korean Patent Application No. 10-2022-0165774 filed in the Korean Intellectual Property Office on December 1, 2022, and Korean Patent Application No. 10-2022-0165783 filed in the Korean Intellectual Property Office on December 1, 2022, the entire contents of which are incorporated herein by reference.

### [Background Art]

For a cylindrical battery, a jelly-roll type electrode assembly is manufactured by rolling a long electrode having a predetermined width into a roll form. In a cylindrical battery manufactured by inserting such a jelly-roll type electrode assembly into a battery case, the electrodes undergo repeated contraction/expansion during charging and discharging. In particular, when a tab (in tab) is located in a core of the jelly-roll type electrode assembly or a degree of contraction/expansion of the electrode assembly increases due to a silicon-based active material added in a negative electrode, a pressure acting on a core part of the electrode assembly greatly increases.

Recently, as low-resistance/high-capacity designs increase, jelly-roll type electrode assemblies including multiple tabs or have the amount of silicon-based active materials added thereto increase, and a thickness of a separator becomes thinner for high-capacity designs.

As the thickness decreases, the physical strength of the separator becomes weaker, the possibility of deformation of the electrode assembly located in the core part increases due to contraction/expansion of the electrode assembly, and in particular, if the separator located between a negative electrode and a positive electrode is damaged, the negative electrode and the positive electrode come into direct contact with each other, causing heat generation and ignition due to an internal short-circuit.

In order to solve the problems of the damage to the separator and the internal short-circuit caused by the deformation of the electrode assembly, it is necessary to develop a technology capable of protecting the electrodes and separator in the corresponding region and suppressing the occurrence of internal short-circuit.

### [Detailed Description of the Invention]

### [Technical Problem]

The present disclosure has been made in an effort to provide a jelly-roll type electrode assembly whose design has been changed, and a secondary battery including the same.

However, the problem to be solved by the present disclosure is not limited to the above-mentioned problem, and other problems not mentioned will be apparently understood by one skilled in the art from the following description.

### [Technical Solution]

There is provided a jelly-roll type electrode assembly in which a first electrode, a first separator, a second electrode, and a second separator are sequentially stacked and wound, wherein the second electrode has a first surface in a direction of a winding axis of the jelly-roll type electrode assembly and a second surface opposite to the first surface, wherein a core part of the electrode assembly includes a first separator overlapping portion provided on the first surface of the second electrode and a second separator overlapping portion provided on the second surface of the second electrode, and wherein the first separator overlapping portion and the second separator overlapping portion are provided in a region corresponding to a longitudinal end portion of the second electrode.

Another exemplary embodiment of the present invention provides a secondary battery including the jelly-roll type electrode assembly described above; and a battery case for accommodating the electrode assembly.

### [Advantageous Effects]

The jelly-roll type electrode assembly according to an exemplary embodiment of the present invention includes the separator overlapping portion at which a bending and overlapping structure of the separator at the core part has been changed, thereby preventing damage to the first electrode and the separator due to deformation of the electrode assembly resulting from contraction/expansion of the electrode during charging and discharging of the battery. In addition, even when the separator is damaged, the separator overlapping portion can prevent an Internal short-circuit between the first electrode and the second electrode to improve the stability and life characteristics of the battery.

In addition, in the secondary battery according to an aspect of the present invention, even when the electrode assembly is deformed due to contraction/expansion of the electrode during charging and discharging of the battery, the separator overlapping portion can prevent an internal short-circuit between the first electrode and the second electrode to improve the stability and life characteristics of the battery.

The effects of an aspect of the present invention are not limited to the foregoing effects, and effects not mentioned will be apparently understood by one skilled in the art from the present specification and accompanying drawings.

### [Brief Description of Drawings]

FIGS. 1 to 6 schematically show a jelly-roll type electrode assembly including a separator overlapping portion according to an exemplary embodiment of the present invention.
FIG. 7 shows a secondary battery according to an exemplary embodiment of the present invention.

### <Explanation of Reference Numerals and Symbols>

100, 100': first electrode
101: first electrode current collector
102, 103: first electrode active material layer
120: longitudinal end portion of first electrode
20, 20': first separator
300: second electrode
301: second electrode current collector
302, 303: second electrode active material layer
320: longitudinal end portion of second electrode
40, 40': second separator
S1: first separator overlapping portion
S2: second separator overlapping portion
L1, L1': distance between longitudinal end portion of second electrode and longitudinal end portion of first separator overlapping portion
L2, L2': distance between longitudinal end portion of second electrode and longitudinal end portion of second separator overlapping portion
50: battery case
1000: secondary battery

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

An exemplary embodiment of the present invention provides a jelly-roll type electrode assembly in which a first electrode, a first separator, a second electrode, and a second separator are sequentially stacked and wound, wherein the second electrode has a first surface in a direction of a winding axis of the jelly-roll type electrode assembly and a second surface opposite to the first surface, wherein a core part of the electrode assembly includes a first separator overlapping portion provided on the first surface of the second electrode and a second separator overlapping portion provided on the second surface of the second electrode, and wherein the first separator overlapping portion and the second separator overlapping portion are provided in a region corresponding to a longitudinal end portion of the second electrode.

The jelly-roll type electrode assembly according to an exemplary embodiment of the present invention includes the separator overlapping portion at which a bending and overlapping structure of the separator at the core part has been changed, thereby preventing damage to the first electrode and the separator due to deformation of the electrode assembly resulting from contraction/expansion of the electrode during charge and discharge of the battery. In addition, even when the separator is damaged, the separator overlapping portion can prevent an internal short-circuit between the first electrode and the second electrode to improve the stability and life characteristics of the battery. Here, the 'core part' is a region including a hollow located on a winding axis of the electrode assembly, and a part of a stack structure of the wound first electrode/first separator/second separator/second separator, and may refer to a region within two turns of the second electrode from one end portion, in the longitudinal direction, of the second electrode located on the innermost side of the electrode assembly.

According to an exemplary embodiment of the present invention, the first separator overlapping portion and the second separator overlapping portion may be provided in a region corresponding to the longitudinal end portion of the second electrode. Specifically, the first separator overlapping portion and the second separator overlapping portion may be provided in a region corresponding to the longitudinal end portion where winding of the second electrode begins. In other words, an extension line perpendicular to the longitudinal direction of the longitudinal end portion of the second electrode may be located between both longitudinal end portions of the first separator overlapping portion and the second separator overlapping portion. When the first separator overlapping portion and the second separator overlapping portion are provided in a region corresponding to the longitudinal end portion of the second electrode, damage to the first electrode and the separator due to the sharp longitudinal end portion of the second electrode can be prevented during charging and discharging of the battery.

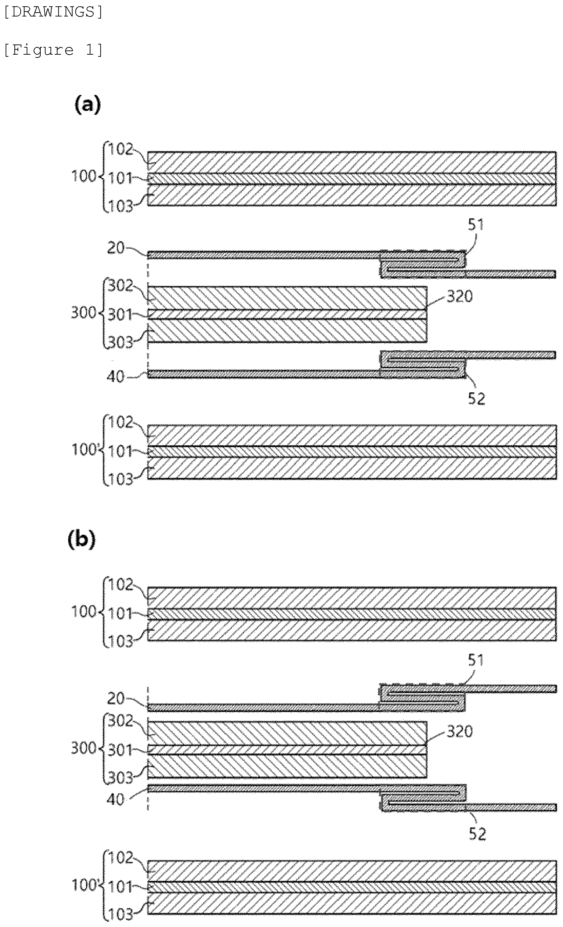

FIG. 1 shows a jelly-roll type electrode assembly including a separator overlapping according to an exemplary embodiment of the present invention. Specifically, FIG. 1(a) shows a jelly-roll type electrode assembly including a first separator overlapping portion and a second separator overlapping portion formed by bending a first separator and a second separator toward a second electrode side, respectively, and FIG. 1(b) shows a jelly-roll type electrode assembly including a first separator overlapping portion and a second separator overlapping portion formed by bending a first separator and a second separator toward an opposite side to a second electrode.

According to an exemplary embodiment of the present invention, the first separator overlapping portion and the second separator overlapping portion may be formed by bending the first separator and the second separator, respectively. Specifically, the first separator may be bent to form the first separator overlapping portion that is provided on a first surface of the second electrode, and the second separator may be bent to form the second separator overlapping portion that is provided on a second surface of the second electrode. By forming the first separator overlapping portion and the second separator overlapping portion on the first and second surfaces of the second electrode, respectively, damage to the first electrode and the separator caused by the longitudinal end portion of the second electrode can be effectively prevented. In addition, by adjusting the bending directions of the separators forming the first separator overlapping portion and the second separator overlapping portion, additional effects according to each bending structure may be obtained.

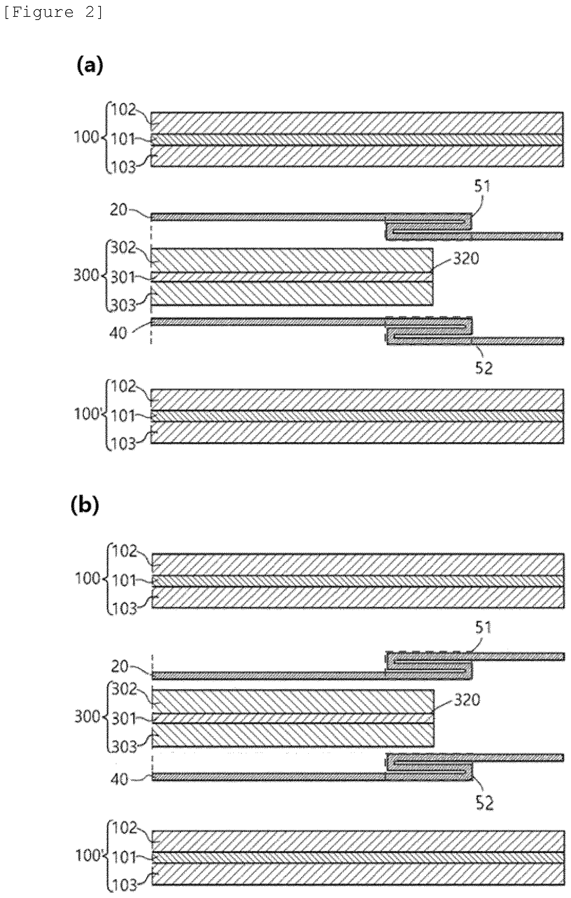

Referring to FIGS. 1 and 2, a first separator 20 may be bent to form a first separator overlapping portion S1 that is provided on a first surface of a second electrode 300 facing a first electrode 100, and a second separator 40 may be bent to form a second separator overlapping portion S2 that is provided on a second surface of the second electrode 300 facing a first electrode 100'.

According to an exemplary embodiment of the present invention, the first separator overlapping portion and the second separator overlapping portion may be formed by bending the first separator and the second separator toward the second electrode side, respectively. Specifically, referring to FIG. 1(a), the first separator overlapping portion S1 may be formed on the first surface of the second electrode 300 by bending the first separator 20 toward the second electrode 300 side. In addition, the second separator overlapping portion S2 may be formed on the second surface of the second electrode 300 by bending the second separator 40 toward the second electrode 300 side. In this case, an empty space between the first electrode and the separator can be minimized, so even during highspeed charge, local problems that may occur due to an additional step, such as lithium precipitation in the space between the first electrode and the separator, can be minimized.

According to an exemplary embodiment of the present invention, the first separator overlapping portion and the second separator overlapping portion may be formed by bending the first separator and the second separator toward opposite sides to the second electrode, respectively. Specifically, referring to FIG. 1(b), the first separator overlapping portion S1 may be formed on the first surface of the second electrode 300 by bending the first separator 20 toward an opposite side to the second electrode 300. In addition, the second separator overlapping portion S2 may be formed on the second surface of the second electrode 300 by bending the second separator 40 toward an opposite side to the second electrode 300. In this case, even when a diameter of a winding core is small or a loading amount of a second electrode active material layer is increased, the second electrode does not directly face a step caused by the separator overlapping portion located on the first or second surface. As a result, the occurrence of cracks in the second electrode can be reduced. In addition, even when sliding due to contraction/expansion of the first electrode is repeated during long-term cycling, the deformation of the separator overlapping portion can be minimized, so the effect of preventing cracks in the first electrode and the life characteristics of the battery can be further improved.

According to an exemplary embodiment of the present invention, the first separator overlapping portion may be formed by bending the first separator toward the second electrode side, and the second separator overlapping portion may be formed by bending the second separator toward an opposite side to the second electrode. Specifically, referring to FIG. 2(a), the first separator overlapping portion S1 may be formed on the first surface of the second electrode 300 by bending the first separator 20 toward the second electrode side. In addition, the second separator overlapping portion S2 may be formed on the second surface of the second electrode 300 by bending the second separator 40 toward an opposite side to the second electrode 300. In this case, even when the longitudinal end portion of the second electrode faces toward the second surface upon winding the electrode assembly, the effect of protecting the first electrode and the separator by the second separator overlapping portion can be further improved, and damage to the first separator overlapping portion can be minimized to further improve the life characteristics of the battery.

According to an exemplary embodiment of the present invention, the first separator overlapping portion may be formed by bending the first separator toward an opposite side to the second electrode, and the second separator overlapping portion may be formed by bending the second separator toward the second electrode side. Specifically, referring to FIG. 2(b), the first separator overlapping portion S1 may be formed on the first surface of the second electrode 300 by bending the first separator 20 toward an opposite side to the second electrode. In addition, the second separator overlapping portion S2 may be formed on the second surface of the second electrode 300 by bending the second separator 40 toward the second electrode 300 side. In this case, even when the separator overlapping portion is interposed between the first electrode and the second electrode upon winding the electrode assembly, a thickness of the second separator overlapping portion S2 and a thickness of the first separator overlapping portion S1 allow stepwise step formation, improving the roundness of the electrode assembly.

According to an exemplary embodiment of the present invention, the first separator overlapping portion and the second separator overlapping portion may be formed by bending the first separator and the second separator two or more times, respectively. Specifically, the first separator overlapping portion and the second separator overlapping portion may be formed by bending the first separator and the second separator two or more times and four times or less, respectively. More specifically, the first separator overlapping portion and the second separator overlapping portion may be formed by bending the first separator and the second separator two or four times, respectively. If the number of times of bending is less than two times, the effect of preventing damage to the first electrode and the separator may be inferior. If the number of times of bending exceeds four times, an additional step is formed, so stress may be concentrated on the corresponding region, causing additional damage to the separator and a local problem such as lithium precipitation due to lack of an electrolyte solution.

According to an exemplary embodiment of the present invention, the first separator overlapping portion and the second separator overlapping portion may be formed by overlapping the first separator and the second separator in three or more folds, respectively. Specifically, the first separator overlapping portion and the second separator overlapping portion may be formed by overlapping the first separator and the second separator in three or more folds and five or less folds, respectively. More specifically, the first separator overlapping portion and the second separator overlapping portion may be formed by overlapping the first separator and the second separator in three folds or five folds, respectively. If the separator is overlapped in less than three folds, the effect of preventing damage to the first electrode and the separator may be inferior. If the separator is overlapped in more than five folds, an additional step is formed, so stress may be concentrated on the corresponding region, causing additional damage to the separator and a local problem such as lithium precipitation due to lack of an electrolyte solution.

According to an exemplary embodiment of the present invention, the first separator overlapping portion and the second separator overlapping portion may each have a length in a width direction of 100% or greater and 110% or less based on 100% of a width of the second electrode. Specifically, the length of each of the first separator overlapping portion and the second separator overlapping portion in the width direction may be 100% or greater and 1050 or less or 1050 or greater and 110% or less based on 100% of the width of the second electrode. The widths of the first electrode and the separator may be larger than the width of the second electrode in order to improve the charge/discharge efficiency and the battery stability, and damage to the first electrode and the separator due to the sharp longitudinal end portion of the second electrode may occur at the entire end portion, in the longitudinal direction, of the second electrode. Accordingly, the effect of preventing damage to the first electrode and the separator can be further improved by adjusting the lengths, in the width direction, of the first separator overlapping portion and the second separator overlapping portion to cover the entire width of the second electrode. Note that, when the lengths, in the width direction, of the first separator overlapping portion and the second separator overlapping portion satisfy the above-described range, differences from the lengths, in the width direction, of the first separator and the second separator can be minimized to improve processability.

According to an exemplary embodiment of the present invention, lengths, in the longitudinal direction, of the first separator overlapping portion and the second separator overlapping portion may be 0.1 mm or greater and 30 mm or less. Specifically, the lengths, in the longitudinal direction, of the first separator overlapping portion and the second separator overlapping portion may be 1 mm or greater, 2 mm or greater, 3 mm or greater, 4 mm or greater, or 5 mm or greater, and 29 mm or less, 28 mm or less, 27 mm or less, 26 mm or less, or 25 mm or less. When the lengths, in the longitudinal direction, of the first separator overlapping portion and the second separator overlapping portion satisfy the above-described range, the separator overlapping portions can be located in a region corresponding to the longitudinal end portion of the second electrode direction even though sliding of the second electrode occurs during charging and discharging of the battery. In addition, even when a predetermined process error occurs, the effect of preventing damage to the first electrode and the separator by the separator overlapping portion may be further improved. Here, the length, in longitudinal direction, of the first separator overlapping portion may refer to a sum of distances L1 and L1' from a longitudinal end portion 320 of the second electrode to both longitudinal end portions of the first separator overlapping portion S1. In addition, the length, in the longitudinal direction, of the second separator overlapping portion may refer to a sum of distances L2 and L2' from the longitudinal end portion 320 of the second electrode to both longitudinal end portions of the second separator overlapping portion S2.

According to an exemplary embodiment of the present invention, central portions of the first separator overlapping portion and the second separator overlapping portion may be provided in a region corresponding to the longitudinal end portion of the second electrode. For example, an extension line from a 1/2 point of the length, in longitudinal direction, of each of the first separator overlapping portion and the second separator overlapping portion may coincide with a longitudinal end portion where winding of the second electrode begins. Here, when the length in the longitudinal direction is denoted as L, the 'central portion' may refer to a region between a line connecting 1/3L points and a line connecting 2/3L points at a distance from one end portion in the longitudinal direction, and 'coincidence' may include a case where an end portion is formed at substantially the same position due to a process error that may occur during the separator bending process or the like. When the central portions of the first separator overlapping portion and the second separator overlapping portion are provided in a region corresponding to the longitudinal end portion of the second electrode, the effect of preventing damage to the first electrode and the separator due to the sharp longitudinal end portion of the second electrode during charging and discharging of the battery can be further improved.

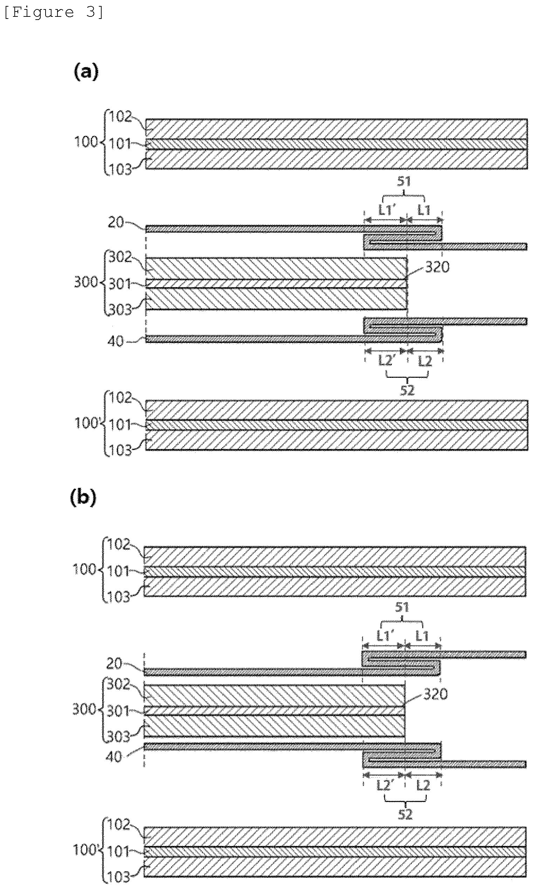

FIG. 3 shows a jelly-roll type electrode assembly including a separator overlapping according to an exemplary embodiment of the present invention. Specifically, FIG. 3(a) shows a jelly-roll type electrode assembly including a first separator overlapping portion and a second separator overlapping portion formed by bending a first separator and a second separator toward a second electrode side, respectively, and FIG. 3(b) shows a jelly-roll type electrode assembly including a first separator overlapping portion and a second separator overlapping portion formed by bending a first separator and a second separator toward an opposite side to a second electrode.

According to an exemplary embodiment of the present invention, a distance between a longitudinal end portion of the second electrode and a longitudinal end portion of the first separator overlapping portion may be 0.5 mm or greater and 15 mm or less. Specifically, referring to FIG. 3(a), distances L1 and L1' between the longitudinal end portion of the second electrode and the longitudinal end portions of the first separator overlapping portion may be the same as or different from each other, and may be each 1 mm or greater, 1.5 mm or greater, 2 mm or greater, 2.5 mm or greater, or 3 mm or greater, and 14.5 mm or less, 14 mm or less, 13.5 mm or less, or 13 mm or less. When the distances L1 and L1' between the longitudinal end portion of the second electrode and the longitudinal end portions of the first separator overlapping portions satisfy the above-described range, the first separator overlapping portion can effectively wrap the first surface of the second electrode and the longitudinal end portion of the second electrode, so the effect of preventing damage to the first electrode and the separator on the first surface of the second electrode can be further improved, and formation of an additional step can be minimized.

According to an exemplary embodiment of the present invention, a distance between the longitudinal end portion of the second electrode and a longitudinal end portion of the second separator overlapping portion may be 0.5 mm or greater and 15 mm or less. Specifically, referring to FIG. 3, distances L2 and L2' between the longitudinal end portion of the second electrode and the longitudinal end portions of the second separator overlapping portion may be the same as or different from each other, and may be each 1 mm or greater, 1.5 mm or greater, 2 mm or greater, 2.5 mm or greater, or 3 mm or greater, and 14.5 mm or less, 14 mm or less, 13.5 mm or less, or 13 mm or less. When the distances L2 and L2' between the longitudinal end portion of the second electrode and the longitudinal end portions of the second separator overlapping portions satisfy the above-described range, the second separator overlapping portion can effectively wrap the second surface of the second electrode and the longitudinal end portion of the second electrode, so the effect of preventing damage to the first electrode and the separator on the second surface of the second electrode can be further improved, and formation of an additional step can be minimized.

According to an exemplary embodiment of the present invention, at the core part of the electrode assembly, the first separator, the first electrode, and the second separator may extend longer than the longitudinal end portion of the second electrode and may be additionally wound. Specifically, the first separator, the first electrode, and the second separator are wound, which may be then wound together with the second electrode. For example, after the first separator, the first electrode, and the second separator are wound one or more turns around a winding core, the first separator, the first electrode, and the second separator may be wound together with the second electrode. That is, at the core part of the jelly-roll type electrode assembly, the longitudinal end portions of the first separator, the first electrode, and the second separator may be located on a further inner side than the longitudinal end portion of the second electrode. In other words, the length and the width of the first electrode may be greater than those of the second electrode, and the lengths and widths of the first separator and the second separator located on one surface and an opposite surface of the first electrode may also be greater than those of the second electrode. When the first separator, the first electrode, and the second separator extend longer than the longitudinal end portion of the second electrode and are additionally wound, lithium ions can be more easily transferred from the second electrode to the first electrode in a chemical reaction of a lithium-ion battery. When the length or width of the first electrode is formed greater, an area of the first electrode for receiving lithium ions increases, making it possible to prevent a decrease in charge/discharge efficiency and to improve the stability and life characteristics of the battery.

According to an exemplary embodiment of the present invention, at the core part of the electrode assembly, the first separator and the second separator extending from the longitudinal end portion of the first electrode may be bent together in a direction opposite to the winding axis direction of the electrode assembly, and the second separator overlapping portion may include a separator overlapped and arranged in two or more folds.

By including the separator overlapping portion at which a bending structure of the separator at the core part has been changed, it is possible to prevent damage to the first electrode and the separator due to deformation of the electrode assembly resulting from contraction/expansion of the electrode during charging and discharging of the battery. In addition, even when the separator is damaged, the separator overlapping portion can prevent an internal short-circuit between the first electrode and the second electrode to improve the stability and life characteristics of the battery.

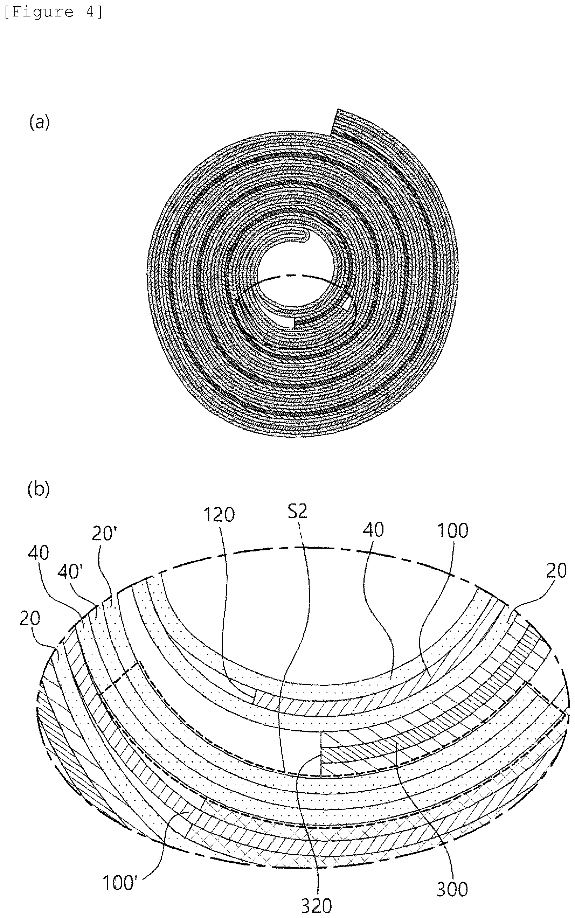

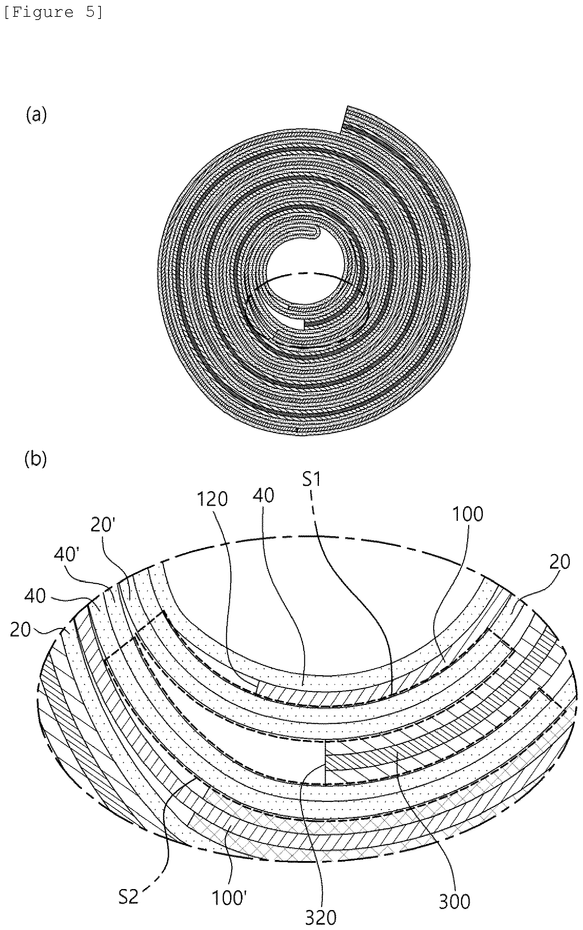

FIGS. 4 and 5 show a jelly-roll type electrode assembly including a separator overlapping portion according to an exemplary embodiment of the present invention. Specifically, FIG. 4 shows a jelly-roll type electrode assembly including a second separator overlapping portion according to an exemplary embodiment of the present invention, and FIG. 5 shows a jelly-roll type electrode assembly including a first separator overlapping portion according to an exemplary embodiment of the present invention.

According to an exemplary embodiment of the present invention, at the core part of the electrode assembly, the first separator and the second separator extending from the longitudinal end portion of the first electrode may be bent together away from the winding axis of the electrode assembly.

Specifically, the first separator and the second separator may extend from a longitudinal end portion of the first electrode at the core part of the electrode assembly, may be bent together away from the winding axis of the electrode assembly, and may be overlapped and arranged between the second electrode and the first electrode facing the first surface or second surface of the second electrode, respectively.

Specifically, referring to FIGS. 4(a) and 4(b), the first separator 20' and the second separator 40' extending from the longitudinal end portion 120 of the first electrode may be bent together away from the winding axis of the electrode assembly are, i.e., toward the longitudinal end portion 320 of the second electrode, and the extended first separator 20' and second separator 40' may be overlapped and arranged between the second electrode 300 and the first electrode 100' facing the second surface of the second electrode to form a second separator overlapping portion S2.

In other words, the first separator 20' and the second separator 40' extending from the longitudinal end portion 120 of the first electrode may be folded back away from the winding axis of the electrode assembly, i.e., in an outer direction of the electrode assembly, and the extended first separator 20' and second separator 40' may be overlapped and arranged between the second electrode 300 and the first electrode 100' facing the second surface of the second electrode to form a second separator overlapping portion S2.

With this, the separator constituting the second separator overlapping portion can be in two or more folds by the simpler bending structure. In addition, by providing the second separator overlapping portion, the effect of preventing damage to the first electrode and separator facing the second surface, which is a surface away from the winding axis, of the second electrode, can be further improved.

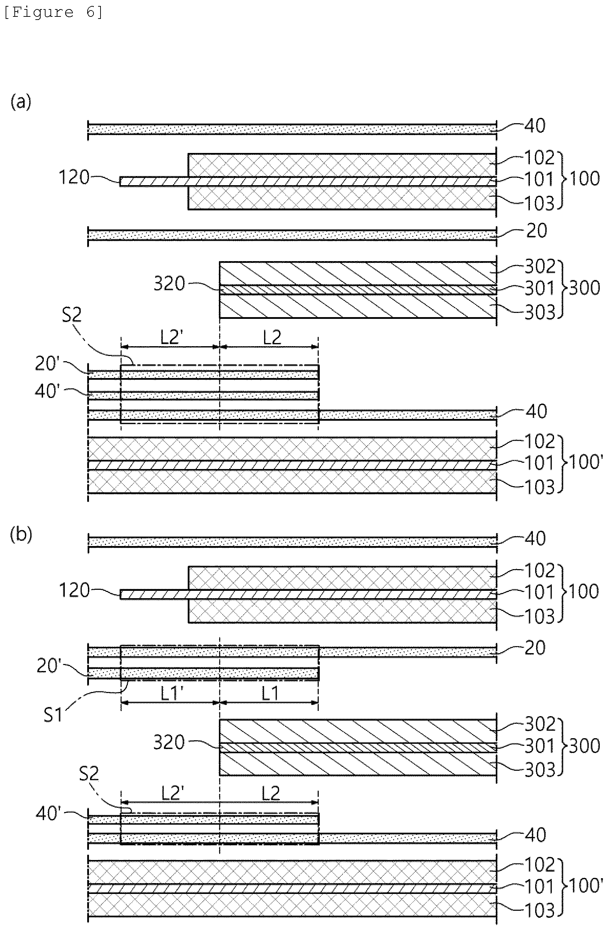

FIG. 6 schematically shows a separator overlapping portion of a jelly-roll type electrode assembly according to an exemplary embodiment of the present invention.

According to an exemplary embodiment of the present invention, the jelly-roll type electrode assembly may include a second separator overlapping portion between the second electrode and the first electrode facing a second surface of the second electrode, and the second separator overlapping portion may have a separator overlapped and arranged in two or more folds.

Specifically, the second separator overlapping portion may have a separator overlapped and arranged in two or more folds or three or more folds and five or less folds, four or less folds, or three or less folds.

Referring to FIGS. 4 and 5, the core part of the electrode assembly may include the second separator overlapping portion S2 between the second electrode 300 and the first electrode 100' facing the second surface of the second electrode. The second separator overlapping portion S2 may refer to a part of a region in which the separator overlapped and arranged is in two or more folds, with respect to the longitudinal end portion 320 of the second electrode.

Here, the second separator overlapping portion S2 may refer to a region up to an end portion of a region in which the separator overlapped and arranged is in two or more folds, with respect to the longitudinal end portion 320 of the second electrode, i.e., a region up to a longitudinal end portion of the second separator overlapping portion, and a region having the same length in a direction of the core part of the electrode assembly.

Specifically, referring to FIG. 4(a), the second separator overlapping portion S2 may refer to, taking the longitudinal end portion 320 of the second electrode as a center, a region ranging from a longitudinal end portion of the second separator overlapping portion S2 to a point to which a length L2' from the longitudinal end portion of the second electrode in the direction of the core part of the electrode assembly is the same as a spaced distance L2 between the longitudinal end portion of the second separator overlapping portion and the longitudinal end portion of the second electrode, i.e., a region having a length (L2+L2'=L2+L2=2L2) from the longitudinal end portion of the second separator overlapping portion S2.

According to an exemplary embodiment of the present invention, the first separator and the second separator may extend longer than the longitudinal end portion of the first electrode and may be additionally wound. That is, the first separator 20 and the second separator 40 may include a region extending from the longitudinal end portion 120 of the first electrode. In other words, the first separator 20 and the second separator 40 are wound by a predetermined length, which may be then wound together with the first electrode 100.

Therefore, the first separator 20' and the second separator 40' extending from the longitudinal end portion 120 of the first electrode may be parts of the first separator 20 and the second separator 40 wound earlier than the first electrode 100, and may be bent, overlapped and arranged to form the first separator overlapping portion S1 or the second separator overlapping portion S2.

That is, the first separator overlapping portion or the second separator overlapping portion can be formed by the bending structure integrally extending from the first separator and the second separator, without providing a separate auxiliary separator. With this, the separator constituting the first separator overlapping portion or second separator overlapping portion can be adjusted to be in two or more folds by the simpler structure.

According to an exemplary embodiment of the present invention, the second separator overlapping portion may be such that the extended second separator is arranged between the second electrode and the second separator facing the second surface of the second electrode.

Specifically, referring to FIGS. 4 and 5, the second separator overlapping portion S2 may be such that the second separator 40' extending from the longitudinal end portion 120 of the first electrode at the core part of the electrode assembly is arranged to overlap the second separator 40. When the extended second separator is arranged between the second electrode and the second separator facing the second surface of the second electrode, the second separator overlapping portion can be formed by the bending structure integrally extending from the second separator, without a separate auxiliary separator or the like. With this, the separator constituting the second separator overlapping portion can be adjusted to be in two or more folds by the simpler structure.

According to an exemplary embodiment of the present invention, the second separator overlapping portion may be such that the extended first separator and the extended second separator are overlapped and arranged between the second electrode and the second separator facing the second surface of the second electrode.

Specifically, referring to FIG. 4, the second separator overlapping portion S2 may be such that the first separator 20' and second separator 40' extending from the longitudinal end portion 120 of the first electrode at the core part of the electrode assembly are arranged to overlap the second separator 40.

When the extended first separator and the extended second separator are overlapped and arranged between the second electrode and the second separator facing the second surface of the second electrode, the second separator overlapping portion can be formed by the bending structure integrally extending from the first separator and the second separator, without a separate auxiliary separator or the like. With this, the separator constituting the second separator overlapping portion can be adjusted to be in three or more folds by the simpler structure.

In addition, when the first separator and the second separator extending from the longitudinal end portion of the first electrode are overlapped in two or more folds and arranged to form the second separator overlapping portion, it is possible to prevent damage to the first electrode and the separator due to deformation of the electrode assembly resulting from contraction/expansion of the electrode. In addition, even when the separator is damaged, the second separator overlapping portion can prevent an internal short-circuit between the first electrode and the second electrode to improve the stability and life characteristics of the battery. In addition, when the second separator overlapping portion is included, the effect of preventing damage to the first electrode and separator facing the second surface, which is away from the winding axis, of the second electrode, can be further improved.

According to an exemplary embodiment of the present invention, a first separator overlapping portion may be further included between the second electrode and the first electrode facing the first surface of the second electrode. Specifically, referring to FIGS. 5(a) and 5(b), the first separator 20' and the second separator 40' extending from the longitudinal end portion 120 of the first electrode may be bent together away from the winding axis of the electrode assembly, i.e., toward the longitudinal end portion 320 of the second electrode. The extended second separator 40' may be overlapped and arranged between the second electrode 300 and the first electrode 100' facing the second surface of the second electrode to form the second separator overlapping portion S2. The extended first separator 20' may be overlapped and arranged between the second electrode 300 and the first electrode 100 facing the first surface of the second electrode to form the first separator overlapping portion S1.

With this, the separators constituting the first separator overlapping portion and the second separator overlapping portion can be in two or more folds by the simpler bending structure, respectively. In addition, by further including the first separator overlapping portion, the effect of preventing damage to the first electrode and separator facing the first surface, which is in the winding axis direction of the second electrode, can be further improved.

According to an exemplary embodiment of the present invention, a first separator overlapping portion may be included between the second electrode and the first electrode facing a first surface of the second electrode, and the first separator overlapping portion may have a separator overlapped and arranged in two or more folds. Specifically, the first separator overlapping portion may have a separator overlapped and arranged in two or more folds or three or more folds and five or less folds, four or less folds, or three or less folds.

Referring to FIG. 5, the core part of the electrode assembly may include the first separator overlapping portion S1 between the second electrode 300 and the first electrode 100 facing the first surface of the second electrode, and the first separator overlapping portion S1 may refer to a part of a region in which the separator overlapped and arranged is in two or more folds, with respect to the longitudinal end portion 320 of the second electrode.

Here, the first separator overlapping portion S1 may refer to a region up to an end portion of a region in which the separator overlapped and arranged is in two or more folds, taking the longitudinal end portion 320 of the second electrode as a center, i.e., a region up to a longitudinal end portion of the first separator overlapping portion, and a region having the same length in a direction of the core part of the electrode assembly.

Specifically, referring to FIG. 5(b), the first separator overlapping portion S1 may refer to, with respect to the longitudinal end portion 320 of the second electrode, a region ranging from a longitudinal end portion of the first separator overlapping portion S1 to a point to which a length L1' from the longitudinal end portion of the second electrode in the direction of the core part of the electrode assembly is the same as a spaced distance L1 between the longitudinal end portion of the first separator overlapping portion and the longitudinal end portion of the second electrode, i.e., a region having a length (L1+L1'=L1+L1=2L1) from the longitudinal end portion of the first separator overlapping portion S1.

According to an exemplary embodiment of the present invention, the first separator overlapping portion may be such that the extended first separator is arranged between the second electrode and the first separator facing the first surface of the second electrode. Specifically, referring to FIG. 5, the first separator overlapping portion S1 may be such that the first separator 20' extending from the longitudinal end portion 120 of the first electrode at the core part of the electrode assembly is arranged to overlap the first separator 20.

When the extended first separator is arranged between the second electrode and the first separator facing the first surface of the second electrode, the first separator overlapping portion can be formed by the bending structure integrally extending from the first separator, without a separate auxiliary separator or the like. With this, the separator constituting the first separator overlapping portion can be adjusted to be in two or more folds by the simpler structure.

According to an exemplary embodiment of the present invention, the first separator overlapping portion may be such that the extended first separator is arranged between the second electrode and the first separator facing the first surface of the second electrode, and the second separator overlapping portion may be such that the extended second separator is arranged between the second electrode and the second separator facing the second surface of the second electrode.

Specifically, referring to FIG. 5, the first separator overlapping portion S1 may be such that the first separator 20' extending from the longitudinal end portion 120 of the first electrode at the core part of the electrode assembly is arranged to overlap the first separator 20, and the second separator overlapping portion S2 may be such that the second separator 40' extending from the longitudinal end portion 120 of the first electrode at the core part of the electrode assembly is arranged to overlap the second separator 40.

When the extended first separator is arranged between the second electrode and the first separator facing the first surface of the second electrode and the extended second separator is arranged between the second electrode and the second separator facing the second surface of the second electrode, the first separator overlapping portion and the second separator overlapping portion can be formed by the bending structure integrally extending from the first separator and the second separator, without a separate auxiliary separator or the like. With this, the separators constituting the first separator overlapping portion and the second separator overlapping portion can be adjusted to be in two or more folds by the simpler structure.

When the first separator and the second separator extending from the longitudinal end portion of the first electrode are overlapped in two or more folds and arranged to form the first separator overlapping portion and the second separator overlapping portion, it is possible to prevent damage to the first electrode and the separator due to deformation of the electrode assembly resulting from contraction/expansion of the electrode. In addition, even when the separator is damaged, the first separator overlapping portion and the second separator overlapping portion can prevent an internal short-circuit between the first electrode and the second electrode to improve the stability and life characteristics of the battery. In addition, when both the first separator overlapping portion and the second separator overlapping portion are included, the effect of preventing damage to the first electrode and the separator facing the first surface toward the winding axis and the second surface in the opposite direction to the first surface of the second electrode can be further improved.

According to an exemplary embodiment of the present invention, the jelly-roll type electrode assembly may include a plurality of separators. For example, the jelly-roll type electrode assembly may have a structure in which the second electrode/first separator/first electrode/second separator are sequentially stacked, or a structure in which the first separator/first electrode/second separator/second electrode are sequentially stacked. The separator serves to separate the second electrode and the first electrode and to provide a migration path of lithium ions, and any separator may be used without particular limitation as long as it is usually used as a separator in a secondary battery, and particularly, a separator having high moisture-retention ability for an electrolyte as well as a low resistance to migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. In addition, the separator may typically have a thickness of 10 um or greater and 20 um or less. A separator in which the above-described separator material is used as a base layer and a slurry containing a ceramic component or a polymer material so as to secure heat resistance or mechanical strength is coated on the base layer may be used. The separator having a single layer or multilayer structure may be selectively used.

According to an exemplary embodiment of the present invention, a length, in the longitudinal direction, of the second separator overlapping portion may be 10% or greater and 50% or less based on 100% of a circumference of an inner peripheral surface of the electrode assembly. Specifically, the length, in the longitudinal direction, of the second separator overlapping portion may be 15% or greater, 20% or greater, 25% or greater, or 30% or greater and 45% or less, 40% or less, 35% or less, or 30% or less on the basis of 100% of the circumference of the inner peripheral surface of the electrode assembly.

That is, the length, in the longitudinal direction, of the second separator overlapping portion may be 1/10 turn or more and 1/2 turn or less or 1/5 turn or more and 1/3 turn or less of the inner peripheral surface of the core part of the electrode assembly. Here, the `circumference of the inner peripheral surface' may refer to a circumference of a virtual circle having the largest value as a radius among distances from the winding axis of the electrode assembly to the innermost layer in contact with the hollow of the electrode assembly. Referring to FIG. 6, the length, in the longitudinal direction, of the second separator overlapping portion may refer to a length of L2+L2'= L2+L2=2L2.

When the length range, in the longitudinal direction, of the second separator overlapping portion is satisfied, while it is possible to prevent damage to the first electrode and the separator, which face the second surface of the second electrode away from the winding axis, due to deformation of the electrode assembly resulting from contraction/expansion of the electrode during charging and discharging of the battery, it is possible to prevent a decrease in charge/discharge efficiency due to an excessive decrease in an area of the negative electrode receiving lithium ions, and to improve the stability and life characteristics of the battery.

According to an exemplary embodiment of the present invention, a spaced distance between the longitudinal end portion of the second separator overlapping portion and the longitudinal end portion of the second electrode may be 2 mm or greater and 10 mm or less. Specifically, referring to FIG. 6, spaced distances L2 and L2' between the longitudinal end portions of the second separator overlapping portion and the longitudinal end portion of the second electrode may be 3 mm or greater, 4 mm or greater, or 5 mm or greater, and 9 mm or less, 8 mm or less, or 7 mm or less. That is, the first separator 20' or the second separator 40' extending from the longitudinal end portion 120 of the first electrode at the core part of the electrode assembly may be arranged over a distance of 2 mm or greater and 10 mm or less from the longitudinal end portion 320 of the second electrode between the second electrode 300 and the first electrode 100' facing the second surface of the second electrode.

When the above-described length range, in the longitudinal direction, of the second separator overlapping portion is satisfied, even though a process error occurs upon introducing the first separator and the second separator, the second separator overlapping portion can be arranged between the second electrode and the first electrode facing the second surface of the second electrode. Therefore, while it is possible to sufficiently prevent damage to the first electrode and the separator facing the second surface of the second electrode, it is possible to prevent a decrease in charge/discharge efficiency due to an excessive decrease in an area of the first electrode receiving lithium ions, improving the stability and life characteristics of the battery.

According to an exemplary embodiment of the present invention, the length, in the longitudinal direction, of the first separator overlapping portion may be the same as or different from the length, in the longitudinal direction, of the second separator overlapping portion. Specifically, the length, in the longitudinal direction, of the first separator overlapping portion may be the same as or smaller than the length, in the longitudinal direction, of the second separator overlapping portion. When the length, in the longitudinal direction, of the first separator overlapping portion is smaller than the length, in the longitudinal direction, of the second separator overlapping portion, formation of additional steps due to the thicknesses of the first separator overlapping portion and the second separator overlapping portion can be minimized, and damage to the first electrode and the separator facing the first surface toward the winding axis and the second surface away from the winding axis, of the second electrode, can be prevented.

According to an exemplary embodiment of the present invention, the length, in the longitudinal direction, of the first separator overlapping portion may be 10% or greater and 50% or less based on 100% of the circumference of the inner peripheral surface of the electrode assembly. Specifically, the length, in the longitudinal direction, of the first separator overlapping portion may be 15% or greater, 20% or greater, 25% or greater, or 30% or greater and 45% or less, 40% or less, 35% or less, or 30% or less on the basis of 100% of the circumference of the inner peripheral surface of the electrode assembly.

That is, the length, in the longitudinal direction, of the first separator overlapping portion may be 1/10 turn or more and 1/2 turn or less or 1/5 turn or more and 1/3 turn or less of the inner peripheral surface of the core part of the electrode assembly. Referring to FIG. 6, the length, in the longitudinal direction, of the first separator overlapping portion may refer to a length of L1+L1'=L1+L1=2L1.

When the above-described length range, in the longitudinal direction, of the first separator overlapping portion is satisfied, while it is possible to prevent damage to the first electrode and the separator, which face the first surface toward the winding axis of the second electrode, due to deformation of the electrode assembly resulting from contraction/expansion of the electrode during charging and discharging of the battery, it is possible to prevent a decrease in charge/discharge efficiency due to an excessive decrease in an area of the first electrode receiving lithium ions, and to improve the stability and life characteristics of the battery.

According to an exemplary embodiment of the present invention, a spaced distance between the longitudinal end portion of the first separator overlapping portion and the longitudinal end portion of the second electrode may be 2 mm or greater and 10 mm or less.

Specifically, referring to FIG. 6, spaced distances L1 and L1' between the longitudinal end portions of the first separator overlapping portion and the longitudinal end portion of the second electrode may be 3 mm or greater, 4 mm or greater, or 5 mm or greater, and 9 mm or less, 8 mm or less, or 7 mm or less. That is, the first separator 20' extending from the longitudinal end portion 120 of the first electrode at the core part of the electrode assembly may be arranged over a distance of 2 mm or greater and 10 mm or less from the longitudinal end portion 320 of the second electrode between the second electrode 300 and the first electrode 100 facing the first surface of the second electrode.

When the above-described length range, in the longitudinal direction, of the first separator overlapping portion is satisfied, even though a process error occurs upon introducing the first separator, the first separator overlapping portion can be arranged between the second electrode and the first electrode facing the first surface of the second electrode. Therefore, while it is possible to sufficiently prevent damage to the first electrode and the separator facing the first surface of the second electrode, it is possible to prevent a decrease in charge/discharge efficiency due to an excessive decrease in an area of the first electrode receiving lithium ions, improving the stability and life characteristics of the battery.

According to an exemplary embodiment of the present invention, the first electrode may include a first electrode current collector; and a first electrode active material layer provided on at least one surface of the first electrode current collector. Specifically, the first electrode may include a first electrode current collector and a first electrode active material layer formed on one surface or both surfaces of the first electrode current collector and including a first electrode active material. In other words, the first electrode active material layer may be formed on a first electrode coated portion of the first electrode current collector, and a surface not provided with the first electrode active material layer may be expressed as a first electrode uncoated portion.

According to an exemplary embodiment of the present invention, the first electrode current collector may include a first electrode coated portion where the first electrode active material layer is formed and a first electrode uncoated portion where the first electrode active material layer is not formed, and may include a first electrode tab on the first electrode uncoated portion. Specifically, the first electrode current collector may include a first electrode uncoated portion and a first electrode tab formed on the first electrode uncoated portion. Accordingly, the manufactured electrode assembly may include one or more first electrode tabs.

According to an exemplary embodiment of the present invention, the second electrode may include a second electrode current collector; and a second electrode active material layer provided on at least one surface of the second electrode current collector. Specifically, the second electrode may include a second electrode current collector and a second electrode active material layer formed on one surface or both surfaces of the second electrode current collector and including a second electrode active material. In other words, the second electrode active material layer may be formed on a second electrode coated portion of the second electrode current collector, and a surface not provided with the second electrode active material layer may be expressed as a second electrode uncoated portion.

According to an exemplary embodiment of the present invention, the second electrode current collector may include a second electrode coated portion where the second electrode active material is coated and a second electrode uncoated portion where the second electrode active material is not coated, and may include a second electrode tab on the second electrode uncoated portion. Specifically, the second electrode current collector may include a second electrode uncoated portion and a second electrode tab formed on the second electrode uncoated portion.

According to an exemplary embodiment of the present invention, the second electrode current collector and the second electrode active material layer provided on the second electrode current collector of the second electrode may have longitudinal end portions at the same position. In other words, one end portion, in the longitudinal direction, of the second electrode may be of a free-edge shape. With this, an area of an unnecessary uncoated portion on the second electrode current collector can be reduced to secure economic efficiency, and a slitting process can be performed after forming an active material layer on an electrode, so that a slitting process and a roll-to-roll process including a winding process can be performed more efficiently. Here, the description 'same position' means that the end portions in the longitudinal direction are the same, and may include a case where the end portions are formed at substantially the same positions due to a process error that may occur in the slitting process or the like.

According to an exemplary embodiment of the present invention, the first electrode may be a negative electrode, and the second electrode may be a positive electrode. Specifically, the first electrode, the first electrode current collector, and the first electrode active material layer may be a negative electrode, a negative electrode current collector, and a negative electrode active material layer, respectively, and the second electrode, the second electrode current collector, and the second electrode active material layer may be a positive electrode, a positive electrode current collector, and a positive electrode active material layer, respectively.

According to an exemplary embodiment of the present invention, the negative electrode active material layer may include a negative electrode active material including one or more selected from the group consisting of a silicon-based material and a carbon-based material. In addition, the negative electrode active material layer may further include a negative electrode conductive material and a negative electrode binder, and for the negative electrode active material, the negative electrode conductive material, and the negative electrode binder, materials that are used in the art may be used without limitation.

According to an exemplary embodiment of the present invention, the negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, of the like may be used. Specifically, transition metals that adsorb carbon well, such as copper and nickel, may be used for the negative electrode current collector. A thickness of the negative electrode current collector may be 6 um or greater and 80 um or less. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the negative electrode conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the positive electrode current collector is not particularly limited as long as it has conductivity without inducing a chemical change in the battery. Specifically, for the positive electrode current collector, stainless steel, aluminum, nickel, titanium, fired carbon, aluminum or stainless steel each surface treated with carbon, nickel, titanium, silver, or the like, or the like may be used. That is, the positive electrode current collector may be provided in the form of surface-treated stainless steel, an aluminum foil or the like.

In addition, the positive electrode current collector may typically have a thickness of 3 to 50 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

According to an exemplary embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}0₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

An exemplary embodiment of the present invention provides a secondary battery including the jelly-roll type electrode assembly described above, and a battery case for accommodating the electrode assembly. Specifically, the secondary battery may include the electrode assembly according to an exemplary embodiment described above and a battery case for accommodating the electrode assembly.

The secondary battery according to an embodiment of the present invention includes the separator overlapping portion where the bending and overlapping structure of the separator at the core part is adjusted, so that even when the electrode assembly is deformed due to contraction/expansion of the electrode during charging and discharging of the battery, an internal short-circuit between the second electrode and the first electrode can be prevented to improve the stability and life characteristics of the battery.

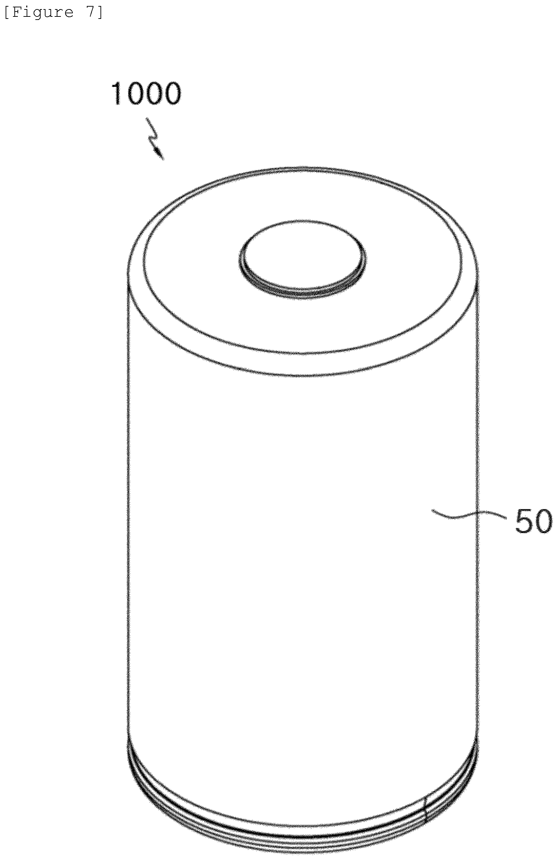

According to an exemplary embodiment of the present invention, the battery case may have a cylindrical shape. Specifically, the battery case may have a cylindrical, prismatic, or pouch shape depending on use applications. However, the battery case having a cylindrical shape may be more suitable for accommodating a jelly-roll type electrode assembly. When the battery case has a cylindrical shape, a shape of a secondary battery including the jelly-roll type electrode assembly and a battery case for accommodating the electrode assembly may have a cylindrical shape. That is, referring to FIG. 7, since the jelly-roll type electrode assembly according to an embodiment of the present invention can be accommodated in a cylindrical battery case 50, and the battery case in which the electrode assembly, a cap assembly, and an electrolyte are included has a cylindrical shape, the manufactured secondary battery 1000 itself may have a cylindrical shape.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the battery module. Since the battery module and the battery pack include the secondary battery with high capacity, high battery stability and high life characteristics, the battery module and the battery pack may be used as a power source of a medium and large sized device selected from the group consisting of an electric vehicle, a hybrid electric vehicle, a plug-in hybrid electric vehicle, and a power storage system.

The foregoing detailed description is intended to illustrate and explain the present invention. In addition, the foregoing description is only to show and describe the preferred embodiment of the present invention, and as described above, the present invention can be used in various other combinations, changes and environments, and can be changed and modified within the scope of the concept of the invention disclosed in the present specification, within the scope equivalent to the above disclosure and/or within the scope of skill or knowledge in the art. Accordingly, the foregoing detailed description of the invention is not intended to limit the invention to the disclosed embodiments. Furthermore, the appended claims should be construed to include other embodiments as well.

## Claims

1. A jelly-roll type electrode assembly includes:
a first electrode;
a first separator;
a second electrode; and
a second separator,
wherein the first electrode, the first separator, the second electrode, and the second separator are sequentially stacked and wound,
wherein the jelly-roll type electrode assembly includes a winding axis and a core part,
wherein the second electrode has a first surface and a second surface, wherein the first surface is disposed to face the winding axis of the jelly-roll type electrode assembly, and wherein the second surface is disposed opposite to the first surface,
wherein the core part includes a first separator overlapping portion and a second separator overlapping portion, wherein the first separator overlapping portion is provided on the first surface of the second electrode and the second separator overlapping portion is provided on the second surface of the second electrode, and
wherein the first and second separator overlapping portions are provided in a distal region of an end portion of the second electrode in a longitudinal direction of the second electrode.

2. The jelly-roll type electrode assembly of claim 1, wherein the first and second separator overlapping portions include a bent portion of the first separator and a bent portion of the second separator, where the bent portions of the first and second separators bent toward the first and second surfaces of the second electrode, respectively.

3. The jelly-roll type electrode assembly of claim 1, wherein each of the first and second separator overlapping portions are formed by bending the first separator and the second separator two or more times, respectively.

4. The jelly-roll type electrode assembly of claim 1, wherein the first separator overlapping portion and the second separator overlapping portion are such that the first separator and the second separator are overlapped in three or more folds, respectively.

5. The jelly-roll type electrode assembly of claim 1, wherein each of the first separator overlapping portion and the second separator overlapping portion have a dimension in a width direction of the second electrode,
wherein the dimension is an amount in a range of 100% to 110% based on a width of the second electrode.

6. The jelly-roll type electrode assembly of claim 1, wherein each of the first separator overlapping portion and the second separator overlapping portion have a length in the longitudinal direction,
wherein the length is in a range of 0.1 mm to 30 mm.

7. The jelly-roll type electrode assembly of claim 1,
wherein a portion of the first separator and a portion of the second separator extend from a distal region of an end portion of the first electrode and are bent together away from the winding axis of the electrode assembly, and
wherein the second separator overlapping portion has a separator overlapped and arranged in two or more folds.

8. The jelly-roll type electrode assembly of claim 7, wherein
the first separator, the first electrode, and the second separator extend beyond the distal region of the end portion of the second electrode and are additionally wound.

9. The jelly-roll type electrode assembly of claim 7, wherein the second separator overlapping portion is such that the portion of the second separator is arranged between the second electrode and the second separator facing the second surface of the second electrode.

10. The jelly-roll type electrode assembly of claim 7, wherein the second separator overlapping portion is such that the portions of the first and second separators overlap and are arranged between the second electrode and the second separator facing the second surface of the second electrode.

11. The jelly-roll type electrode assembly of claim 7, wherein the first separator overlapping portion is disposed between the second electrode and the first electrode facing the first surface of the second electrode,
wherein the first separator overlapping portion has a separator overlapped and arranged in two or more folds.

12. The jelly-roll type electrode assembly of claim 7, wherein the first separator overlapping portion is disposed between the second electrode and the first electrode facing the first surface of the second electrode,
wherein the first separator overlapping portion is such that the portion of the first separator is arranged between the second electrode and the first separator facing the first surface of the second electrode.

13. The jelly-roll type electrode assembly of claim 7, wherein the first separator overlapping portion is disposed between the second electrode and the first electrode facing the first surface of the second electrode,
wherein the first separator overlapping portion is such that the portion of the first separator is arranged between the second electrode and the first separator facing the first surface of the second electrode, and
wherein the second separator overlapping portion is such that the portion of the second separator is arranged between the second electrode and the second separator facing the second surface of the second electrode.

14. The jelly-roll type electrode assembly of claim 1, wherein the second electrode comprises:
a second electrode current collector; and
a second electrode active material layer provided on at least one surface of the second electrode current collector and having an end portion at a same position as an end portion of the second electrode current collector.

15. The jelly-roll type electrode assembly of claim 1, wherein the first electrode is a negative electrode, and the second electrode is a positive electrode.

16. A secondary battery comprising:
the jelly-roll type electrode assembly of claim 1; and
a battery case for accommodating the electrode assembly.

17. The secondary battery of claim 16, wherein the battery case has a cylindrical shape.
